# EUROPEAN PATENT APPLICATION

(11) **EP 4 550 520 A1**
(43) Date of publication of application: **07.05.2025**
(21) Application number: 24819445.8
(22) Date of filing: 06.02.2024
(51) Int. Cl.: H01M 10/42, H01M 10/48, H01M 50/383, H01M 50/289, H01M 50/249

(54) **BATTERY PACK AND VEHICLE COMPRISING SAME**

(30) Priority: 08.06.2023 KR 20230073813
(71) Applicant: LG Energy Solution, Ltd., Seoul 07335 (KR)
(72) Inventor: PARK, Jeong-Hoon, Daejeon 34122 (KR)
(74) Representative: Plasseraud IP
(86) International application number: PCT/KR2024/001763
(87) International publication number: WO 2024/253291

(57) **Abstract**

The present disclosure relates to a battery pack that includes a plurality of battery modules including a plurality of battery cells, a pack case configured to accommodate the plurality of battery modules, and a cartridge provided in the pack case and configured to release carbon dioxide stored therein to the outside of the pack case.

## Description

### TECHNICAL FIELD

The present disclosure relates to a battery pack and a vehicle including the same. More specifically, it relates to a battery pack capable of suppressing or extinguishing flames occurring outside a pack case by detecting temperature, and a vehicle including the same.

The present application claims priority to Korean Patent Application No. 10-2023-0073813 filed on June 08, 2023 in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. If a higher output voltage is required, a battery module or battery pack may be configured by connecting a plurality of battery cells in series. In addition, a battery module or battery pack may be configured by connecting multiple battery cells in parallel in order to increase the charge/discharge capacity. Accordingly, the number of battery cells included in the battery module or battery pack may be set in various ways depending on the required output voltage or charge/discharge capacity.

Meanwhile, a common method for configuring a battery pack by connecting a plurality of battery cells in series/parallel is to preferentially configure a battery module including at least one battery cell and then add other elements using the at least one battery module, thereby configuring a battery pack or battery rack.

In the case of a conventional battery pack, the internal temperature may rise due to abnormalities or misuse of the battery cell, which may result in an increase in the internal pressure of the battery cell. Due to this internal pressure, high-temperature gas may vent from the battery cell, which is very dangerous because the high-temperature venting gas may spread to adjacent battery modules and cause thermal runaway.

In addition, generally, when gas is ejected from the battery cell, pieces of electrode plates or active materials inside the battery cell may be heated to a high temperature and discharged to the outside, and these high-temperature particles may appear in the form of sparks.

In this conventional battery pack, when an abnormal situation happens in a specific battery cell or battery module, high-temperature gas is discharged through a venting device, which is provided in the pack case to discharge the high-temperature gas to the outside of the pack case. At this time, if the sparks are discharged along with the gas to the outside, they may react with oxygen outside the battery pack, making a flame or developing into a fire. Furthermore, if a flame or fire occurs outside a specific battery pack, the fire or the like may spread to other adjacent battery packs or a device equipped with the battery pack, causing bigger problems such as explosion. In this case, if the flame occurring outside the battery pack is not extinguished early, it may spread to other adjacent battery modules inside the battery pack.

Accordingly, if a thermal event occurs in a specific battery cell or battery module, the battery pack is required to remove fuel, oxygen, and heat, which are the elements that cause flame, thereby preventing the high-temperature gas or sparks from reacting with oxygen outside the battery pack and making a flame. In addition, even if a flame occurs, it is necessary to extinguish the flame early to prevent or delay propagation of the flame to other battery modules.

### DISCLOSURE

### Technical Problem

The present disclosure has been designed to solve the problems of the related art, and therefore the present disclosure is directed to providing a battery pack capable of ensuring safety and reliability by suppressing flame from occurring outside the pack case in the event of an abnormality in the battery cell or battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack that includes a plurality of battery modules including a plurality of battery cells, a pack case configured to accommodate the plurality of battery modules, and a cartridge provided in the pack case and configured to release carbon dioxide stored therein to the outside of the pack case.

The pack case may include a base frame configured to constitute the lower surface of the pack case and on which the plurality of battery modules is seated, and a side frame extending upward from the base frame to constitute an outer surface of the pack case, and at least a portion of the cartridge may be coupled to the side frame.

Each of the plurality of battery modules may include a thermistor configured to measure the temperature of gas generated in the battery module, and if the temperature of gas measured by the thermistor is equal to or greater than a first value and if a temperature rise rate is equal to or greater than a second value, carbon dioxide stored inside the cartridge may be released to the outside of the pack case.

For example, carbon dioxide may be released from the cartridge if the first value is 200°C and the second value is 1°C/sec.

The cartridge may include a cylinder unit including a storage portion having a space for storing carbon dioxide therein and a release portion extending from the storage portion and configured to release carbon dioxide.

The diameter of the release portion may be smaller than the diameter of the storage portion.

The cartridge may further include an operating unit connected to the cylinder unit and configured to enable the cylinder unit to release carbon dioxide if the temperature measured by the thermistor is equal to or greater than the first value and if the temperature rise rate is equal to or greater than the second value.

The operating unit may be provided in a space between the side frame and the plurality of battery modules.

The pack case may have a space in which the operating unit is provided.

The battery pack of the present disclosure may further include a temperature sensor configured to measure the temperature of flame occurring outside the pack case, and if the temperature of flame measured by the temperature sensor is a third value, carbon dioxide stored inside the cartridge may be released to the outside of the pack case.

The temperature sensor may be provided on the side frame and configured to measure the temperature of flame.

Carbon dioxide may be released from the cartridge if the third value is 800°C to 1000°C.

The pack case may include a venting device provided on the side frame and configured to discharge gas generated in the battery module to the outside of the pack case, and the cartridge may be configured to release carbon dioxide stored therein to purge oxygen around the venting device.

The cartridge may be disposed side by side with the venting device in the horizontal direction.

A plurality of cartridges and a plurality of venting devices may be provided, and a plurality of units comprised of one or more cartridges and one venting device may be provided, and the plurality of units may be provided symmetrically with respect to the center of the side frame.

The pack case may further include a cross-beam configured to connect at least portions of the side frame to each other and partition the plurality of battery modules, and the plurality of units may be symmetrically provided on both sides of the cross-beam.

The pack case may further include a partition extending from the cross-beam and configured to partition the plurality of battery modules.

**In** addition, the present disclosure also provides a vehicle including the battery pack according to the present disclosure.

### Advantageous Effects

According to one aspect of the present disclosure, it is possible to ensure safety and reliability by suppressing the occurrence of flame outside the pack case by removing elements that may cause flame in the event of an abnormality in the battery cell or battery module.

In addition, according to one aspect of the present disclosure, even if a flame occurs outside the pack case in the event of an abnormality in the battery cell or battery module, it is possible to extinguish the flame early, thereby preventing subsequent chain ignition.

In addition, according to one aspect of the present disclosure, it is possible to maximally prevent thermal damage to other battery modules even if a flame occurs outside the pack case in the event of an abnormality in the battery cell or battery module, thereby effectively securing thermal propagation prevention performance in the pack.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery pack according to an embodiment of the present disclosure.
FIG. 2 is an exploded perspective view of a battery pack according to an embodiment of the present disclosure.
FIG. 3 is a perspective view of a battery module according to an embodiment of the present disclosure.
FIG. 4 is a diagram illustrating the direction in which a cartridge operates in a battery pack according to an embodiment of the present disclosure.
FIG. 5 is a cross-sectional view taken along line A-A' in FIG. 4.
FIG. 6 is a diagram illustrating the detailed structure of a cartridge according to an embodiment of the present disclosure.
FIG. 7 is a diagram illustrating the location of an operating unit of a cartridge according to an embodiment of the present disclosure.
FIG. 8 is a diagram illustrating the location of an operating unit of a cartridge according to another embodiment of the present disclosure.
FIG. 9 is a diagram illustrating the location of a temperature sensor in a battery pack according to another embodiment of the present disclosure.
FIG. 10 is a perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted. For reference, in this specification, terms indicating directions are based on the elements shown in the attached drawings, and are relative terms that may vary depending on the postures or positions of the actual elements.

Meanwhile, although terms indicating directions such as upward, downward, left, right, forward, and backward directions are used in this specification, it is obvious to those skilled in the art that these terms are only for convenience of explanation and may vary depending on the position of the target object or the position of the observer.

For example, in the embodiment of the present disclosure, the X-axis direction shown in the drawing may indicate the forward/backward direction, the Y-axis direction may indicate the left/right direction perpendicular to the X-axis direction on the flat plane (X-Y plane), and the Z-axis direction may indicate the upward/downward direction (vertical direction) perpendicular to both the X-axis direction and the Y-axis direction.

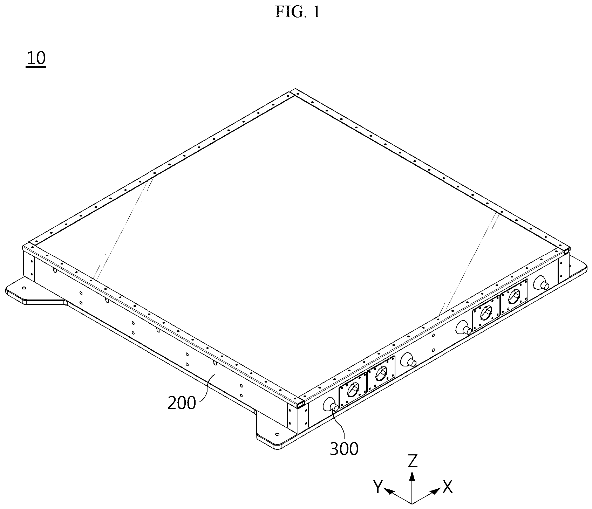

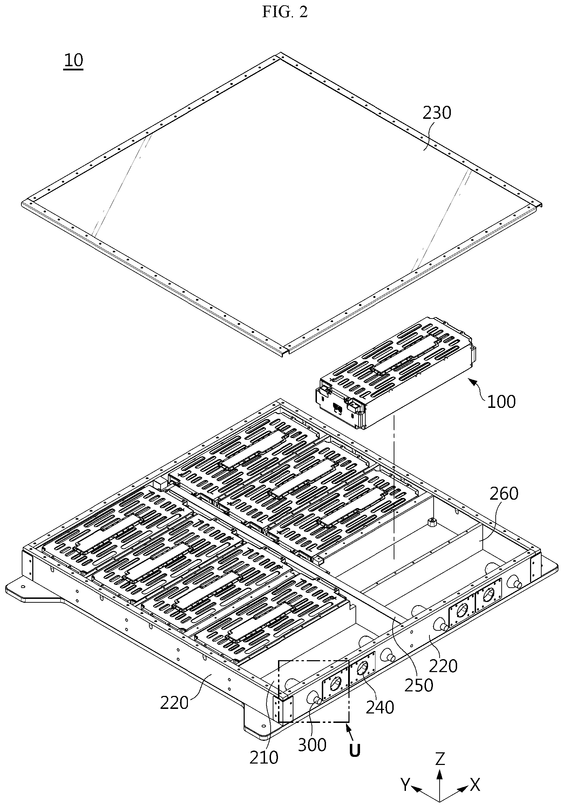

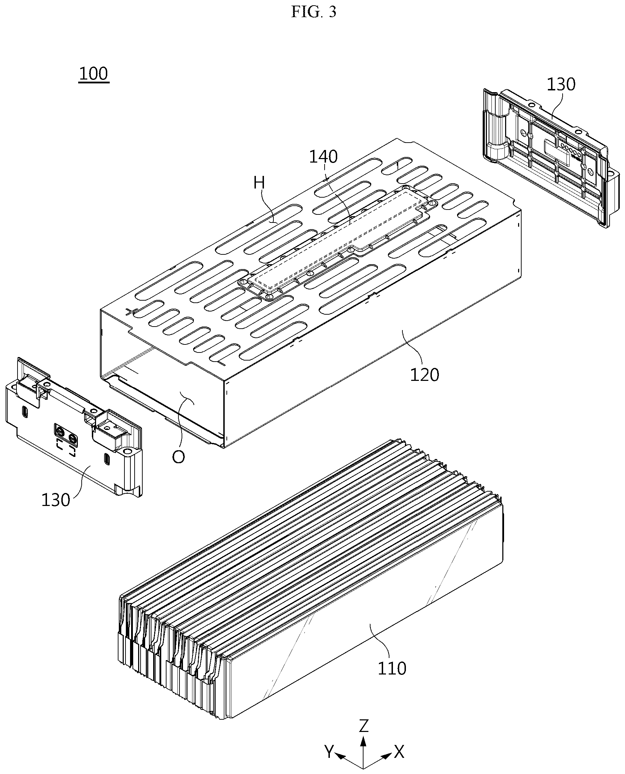

FIG. 1 is a perspective view of a battery pack according to an embodiment of the present disclosure, FIG. 2 is an exploded perspective view of a battery pack according to an embodiment of the present disclosure, and FIG. 3 is a perspective view of a battery module according to an embodiment of the present disclosure.

Referring to FIGS. 1 and 2, a battery pack 10 according to an embodiment of the present disclosure may include a battery module 100, a pack case 200, and a cartridge 300.

The battery module 100 may include a plurality of battery cells 110. The battery cell 110 may be any type of secondary battery, such as a prismatic, cylindrical, or pouch-type battery cell. The present embodiment, as shown in FIG. 3, will be described based on the battery cell 110 that is a pouch-type battery cell.

The present disclosure is not limited to a specific type or form of battery cell 110, and various battery cells 110 known at the time of filing the present disclosure may be used to constitute the battery module 100 of the present disclosure. Although the present embodiment shows a pouch-type secondary battery, which has high energy density and is easy to stack, by way of example as shown in the drawing, a cylindrical or prismatic secondary battery may be applied to the battery cell 110.

The plurality of battery cells 110 may be arranged in columns and rows inside the battery module 100. For example, as shown in FIG. 3, the plurality of battery cells 110 may be arranged side by side in the left/right direction (the Y-axis direction) while standing in the vertical direction (the Z-axis direction).

The battery pack 10 may have a plurality of battery modules 100 including a plurality of battery cells 110 described above. For example, as shown in FIG. 2, the plurality of battery modules 100 may be arranged in a row side by side in the horizontal direction (the X-axis direction and Y-axis direction).

The battery pack 10 according to an embodiment of the present disclosure may include a pack case 200. The pack case 200 may be configured to accommodate the plurality of battery modules 100. The detailed structure of the pack case 200 will be described later.

The battery pack 10 according to an embodiment of the present disclosure may include a cartridge 300. The cartridge 300 may be configured to store carbon dioxide therein. The carbon dioxide may be stored in a liquid state inside the cartridge 300 under high pressure. For example, the cartridge 300 may be a commercially available product that is used to inflate tires of bicycles by injecting carbon dioxide. The cartridge 300 may be used along with an inflator or adapter.

The cartridge 300 may be provided in the pack case 200. The cartridge 300 may be configured to release carbon dioxide stored therein to the outside of the pack case 200.

Specifically, carbon dioxide is heavier than oxygen, so when it is released into a combustible material, it forms an incombustible layer on the surface of the combustible material, thereby blocking the supply of oxygen, which is one of the elements that cause flame. **In** addition, carbon dioxide absorb a large amount of heat when evaporating because it has very high latent heat of evaporation. Therefore, in the event of a flame, carbon dioxide stored in a liquid state inside the cartridge 300 may be vaporized when released to the outside of the cartridge 300, thereby absorbing heat from the surrounding air to cool the same below the ignition point and extinguish the flame according thereto. Although the present embodiment shows carbon dioxide stored inside the cartridge 300, other fire extinguishing agents may be applied as well.

According to the above-implemented configuration of the present disclosure, it is possible to ensure safety and reliability by blocking the supply of oxygen, which is an element causing flame, and suppressing the occurrence of flames outside the pack case 200 according thereto.

In addition, according to the above-implemented configuration of the present disclosure, even if a flame occurs outside the pack case 200, the flame may be extinguished by carbon dioxide released from the cartridge 300 by removing heat, which is an element causing flame, thereby ensuring safety and reliability.

Meanwhile, referring to FIG. 2, the pack case 200 may include a base frame 210 and a side frame 220.

The base frame 210 may be provided to constitute the lower surface of the pack case 200. Accordingly, the plurality of battery modules 100 may be seated on the base frame 210. In this implemented configuration, the base frame 210 may be configured in the form of a square plate.

The side frame 220 may be provided to extend upward from the respective edges of the base frame 210. The side frame 220 may be provided to surround the plurality of battery modules 100. For example, in this implemented configuration, the side frame 220 may include walls extending in the X-axis direction and the Y-axis direction.

At least a portion of the cartridge 300 may be coupled to the side frame 220 of the pack case 200. For example, as shown in FIG. 2, at least a portion of the cartridge 300 may be coupled to the side frame 220 in the -Y-axis direction. In this case, the cartridge 300 may be coupled to face the outside of the pack case 200.

In addition, referring to FIG. 2, the pack case 200 may include a pack lid 230 configured to cover the top of the battery module 100.

Meanwhile, the detailed structure of the battery module 100 according to an embodiment of the present disclosure will be described with reference to FIG. 3. The battery module 100 according to the present embodiment may include a case body 120 and an end plate 130 disposed on the front and rear faces of the case body 120.

The case body 120 may be configured in the shape of a square tube in a hollow structure having open ends O at both ends in the longitudinal direction and having an empty space therein. For example, the case body 120 may be configured in the form of a tube that has an upper face, a lower face, a left face, and a right face, and has openings formed at the front and rear ends, respectively.

In addition, the case body 120 may be formed in various other shapes. For example, the case body 120 may be configured in a form in which a left plate, a right plate, and a bottom plate are integrated with each other. In this case, the integrated case part may be referred to as a U-frame. A top plate may be welded to the top of the U-frame, thereby configuring a tubular shape. Alternatively, the case body 120 may include a box-shaped lower case in which a left plate, a right plate, a front plate, and a rear plate are integrated with each other, and an upper cover that closes the top opening of the lower case.

In addition, the case body 120 may be configured such that the battery cells 110 are able to be inserted thereinto in one direction. For example, the battery cells 110 may be inserted into the case body 120 in the forward/backward direction (the X-axis direction). That is, the case body 120 may be configured to insert the battery cells 110 therein using a sliding or press-fitting manner. For press-fitting, there may be almost no gap between the upper and lower faces of the case body 120 and the upper and lower ends of the battery cells 110, and there may also be almost no gap between both side faces of the case body 120 and both side portions of the battery cells 110.

This case body 120 may be made of a metal material with rigidity and heat resistance in order to physically or chemically protect the accommodated battery cells 110.

Meanwhile, a venting hole H may be provided on the case body 120, enabling directional venting in one direction. For example, as shown in FIG. 3, a plurality of venting holes H may be formed on the upper face of the case body 120, so that directional venting in the upward direction of the battery module 100 may be performed through the venting holes H. Specifically, high-temperature gas discharged from the battery cell 110 through the venting holes H may be discharged to the outside of the pack case 200 through the venting device 300.

The end plate 130 may be provided to be coupled to the open end O of the case body 120. For example, the end plate 130 may have an inner side (facing the open end O) made of an insulating material and an outer side (constituting the exterior of the battery module 100) made of a metal material. In addition, the end plate 130 may have, at least in part, holes or slits through which positive and negative electrode terminals or connectors of the battery module 100 are exposed to the outside.

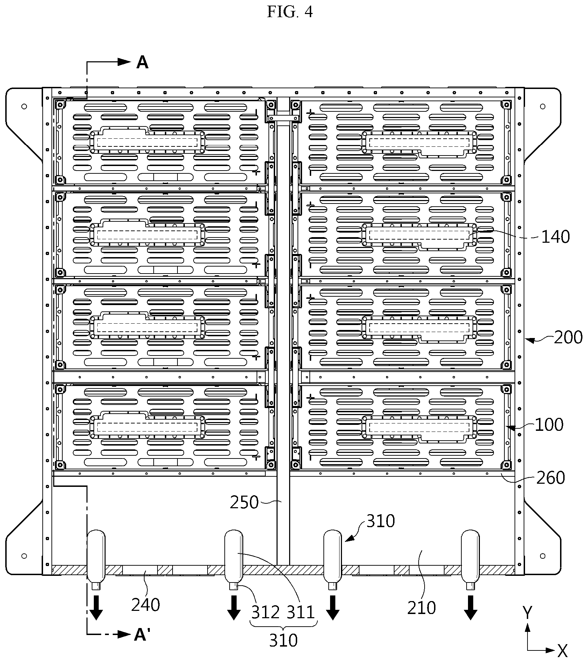

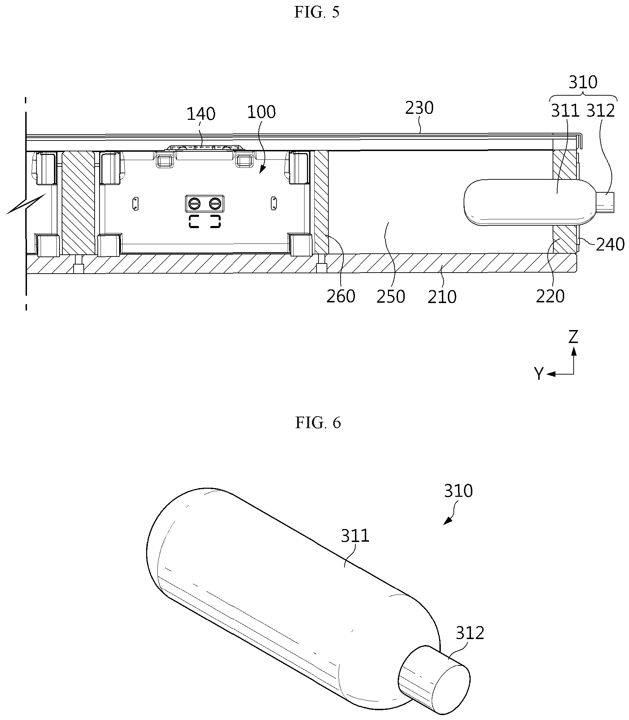

FIG. 4 is a diagram illustrating the direction in which a cartridge operates in a battery pack according to an embodiment of the present disclosure, and FIG. 5 is a cross-sectional view taken along line A-A' in FIG. 4.

Referring to FIGS. 3 to 5, each of the plurality of battery modules 100 according to an embodiment of the present disclosure may include a thermistor 140.

The thermistor 140 may be provided inside the battery module 100 and configured to measure the temperature of the battery module 100 and/or the temperature of venting gas generated from the battery module 100. It is possible to identify whether or not a flame has occurred through the temperature of gas measured by the thermistor 140. For example, as shown in FIG. 3, the thermistor 140 according to an embodiment may be attached to the upper surface of the battery module 100 provided with the venting holes H and may measure the temperature of venting gas. However, the thermistor 140 may be provided at any position as long as it is able to measure the temperature of venting gas.

Specifically, in an embodiment of the present disclosure, if the temperature of gas measured by the thermistor 140 reaches a first value, carbon dioxide stored inside the cartridge 300 may be released to the outside of the pack case 200. In addition, if a temperature rise rate of gas measured by the thermistor 140 reaches a second value, carbon dioxide stored inside the cartridge 300 may be released to the outside of the pack case 200.

For example, in the event of an abnormality in the battery cell 110 or battery module 100, the temperature of the battery module 100 may be between 200°C and 300°C, and at the same time, the temperature of the battery module 100 may rise significantly. If the temperature of gas measured by the thermistor 140 is 200°C, that is, the first value and if the temperature rise rate of gas measured by the thermistor 140 is 1°C/second, that is, the second value, carbon dioxide may be released from the cartridge 300.

According to the above-implemented configuration of the present disclosure, it is possible to detect a risk of flame occurring before the venting gas generated from the battery cell 110 in the event of an abnormality in the battery cell 110 is discharged to the outside of the pack case 200, meets oxygen, and leads to a flame. In addition, according to the above-implemented configuration of the present disclosure, it is possible to prevent flame from occurring by blocking the supply of oxygen, which is the element causing flame, in advance.

FIG. 6 is a diagram illustrating the detailed structure of a cartridge according to an embodiment of the present disclosure.

The cartridge 300 may include a cylinder unit 310. The cylinder unit 310 may include a storage portion 311 having a space for storing carbon dioxide therein, and a release portion 312 extending from the storage portion 311 to release carbon dioxide. As shown in FIG. 5, the storage portion 311 may be coupled to the pack case 200, and in this case, the release portion 312 may be provided to protrude to the outside of the pack case 200.

The diameter of the release portion 312 may be configured to be smaller than the diameter of the storage portion 311. Accordingly, if a flame occurs outside the pack case 200, carbon dioxide may be quickly released from the release portion 312. The release portion 312 may be made of a material with a lower melting point than the storage portion 311. The melting point of the release portion 312 may be similar to the temperature of flame, so that it melts and carbon dioxide is released when flame occurs. According to the above-implemented configuration of the present disclosure, it is possible to suppress the occurrence of flame by instantly purging and removing venting gas and oxygen, which are elements causing flame, using carbon dioxide rapidly released from the cartridge 300.

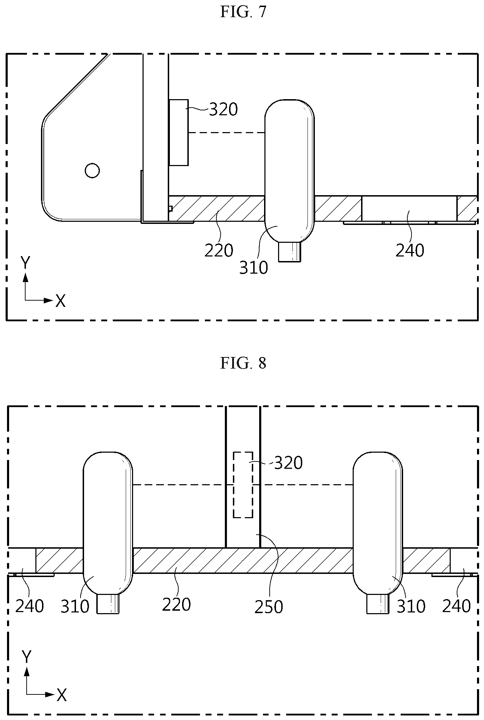

FIG. 7 is a diagram illustrating the location of an operating unit of a cartridge according to an embodiment of the present disclosure.

Meanwhile, the cartridge 300 may further include an operating unit 320. The operating unit 320 may be connected to the cylinder unit 310 and may enable the cylinder unit 310 to release carbon dioxide if the temperature of gas measured by the thermistor 140 is equal to or greater than a first value and if a temperature rise rate is equal to or greater than a second value. The operating unit 320 may be provided in any configuration that allows carbon dioxide to be released from the cylinder unit 310.

According to the implemented configuration of FIG. 7, the operating unit 320 may be provided in a space between the side frame 220 and the plurality of battery modules 100. For example, a plurality of cylinder units 310 may be provided, and a plurality of operating units 320 may be provided to be connected to the plurality of cylinder units 310, respectively. According to the above-implemented configuration of the present disclosure, since the plurality of operating units 320 is respectively connected to the plurality of cylinder units 310, carbon dioxide may be released from a specific cylinder unit 310 depending on the location where flame occurs, thereby effectively suppressing or extinguishing the flame.

FIG. 8 is a diagram illustrating the location of an operating unit of a cartridge according to another embodiment of the present disclosure.

The pack case 200 may have a space in which the operating unit 320 is provided. A space in which the operating unit 320 is provided may be provided inside the side frame 220 or a cross-beam 250. For example, in the case where a space for installing the operating unit 320 is provided inside the cross-beam 250 as shown in FIG. 8, the operating unit 320 may be configured to be connected to the cylinder units 310 provided on both sides of the cross-beam 250 and, if the temperature of gas measured by the thermistor 140 is equal to or greater than the first value and if a temperature rise rate is equal to or greater than the second value, enable several cylinder units 310 provided on both sides of the cross-beam 250 to release carbon dioxide.

According to the above-implemented configuration of the present disclosure, the operating unit 320 may be connected to at least one or more cylinder units 310, so that when a flame occurs at a specific location, several cylinder units 310 may simultaneously release carbon dioxide, thereby suppressing or extinguishing the flame more quickly.

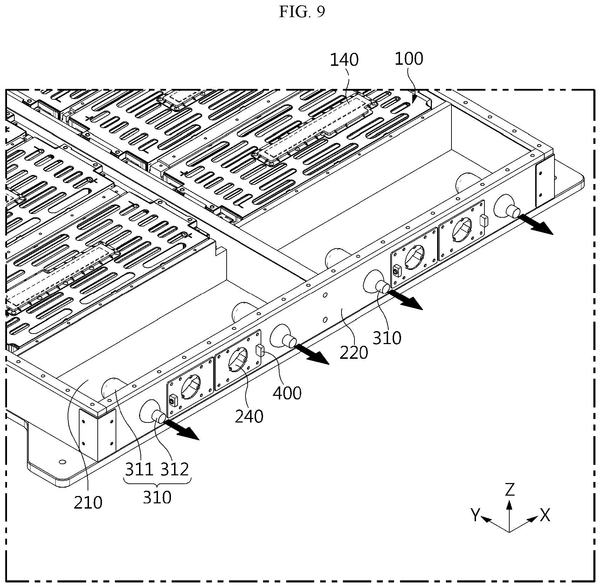

FIG. 9 is a diagram illustrating the location of a temperature sensor in a battery pack according to another embodiment of the present disclosure.

Referring to FIG. 9, a battery pack 10 according to another embodiment of the present disclosure may further include a temperature sensor 400. The temperature sensor 400 may be configured to measure the temperature of flame occurring outside the pack case 200. If the temperature of flame measured by the temperature sensor 400 reaches a third value, carbon dioxide stored inside the cartridge 300 may be released to the outside of the pack case 200.

For example, when a flame occurs, the temperature of the flame may reach 800°C to 1000°C, and if the temperature of flame measured by the temperature sensor 400 falls between 800°C to 1000°C, i.e., the third value, the cartridge 300 may release carbon dioxide.

The temperature sensor 400 may be provided on the side frame 220 of the pack case 200. For example, the temperature sensor 400 and the cartridge 300 may be provided side by side with each other. That is, the temperature sensor 400 may quickly identify whether or not a flame has occurred by directly measuring the temperature of the flame occurring outside the pack case 200.

Even if the temperature of gas measured by the thermistor 140 is equal to or less than the first value or even if the temperature rise rate is equal to or greater than the second value, a flame may occur outside the pack case 200. According to the above-implemented configuration of the present disclosure, even in such a case, the temperature sensor 400 may quickly identify the occurrence of a flame, so that the cartridge 300 may operate to release carbon dioxide, thereby extinguishing the flame.

Meanwhile, referring to FIGS. 1 to 9, the pack case 200 may include a venting device 240. The venting device 240 may be configured to discharge gas generated from the battery module 100 to the outside of the pack case 200 when an abnormal situation happens in the battery module 100. Specifically, venting gas emitted from the battery module 100 may be discharged to the outside of the pack case 200 through the venting device 240.

When gas is ejected from the battery cell 110, pieces of electrode plates or active materials inside the battery cell 110 may be heated to a high temperature and discharged to the outside, and these high-temperature particles may appear in the form of sparks. These sparks may be discharged to the outside of the pack case 200 through the venting device 240, and the sparks may react with oxygen outside the pack case 200 to generate a flame.

At this time, the cartridge 300 may be configured to release carbon dioxide stored therein to purge oxygen around the venting device 240. According to the above-implemented configuration of the present disclosure, it is possible to prevent high-temperature gas or sparks from reacting with oxygen and making flame outside the battery pack by removing oxygen, which is one of the elements that cause flame, when a thermal event occurs in a specific battery cell 110 or battery module 100. In addition, according to the above-implemented configuration of the present disclosure, even if a flame occurs, the flame may be suppressed early to prevent the flame from spreading to the plurality of battery modules inside the pack case.

The venting device 240 may be provided on the side frame 220 of the pack case 200. Although the venting device 240 is provided on the right wall (in the -Y-axis direction) in FIGS. 2 and 4, it may also be provided on the wall in the +Y-axis direction. The venting device 240 may be provided on the side frame 220 in the respective rows in which the plurality of battery modules 100 is arranged. According to the above-implemented configuration of the present disclosure, in the event of an abnormality of the battery cell 110, high-temperature gas or sparks may be discharged in various directions of the pack case 200, so that the gas or the like may be easily discharged to the outside of the pack case 200.

The cartridge 300 may be disposed side by side with the venting device 240 in a horizontal or vertical direction. For example, as shown in FIGS. 3 and 5, the cartridge 300 may be disposed side by side with the venting device 240 in the horizontal direction (X-axis direction). According to the above-implemented configuration of the present disclosure, if oxygen reacts with high-temperature gas or sparks discharged through the venting device 240 in the event of an abnormality in the battery cell 110, leading to a flame, carbon dioxide may be released from the cartridge 300 provided side by side with the venting device 240, thereby quickly extinguishing the flame.

Referring to FIG. 2, a plurality of cartridges 300 and a plurality of venting devices 240 may be provided. In addition, a plurality of units U comprised of one or more cartridges 300 and one venting device 240 may be provided. Although FIG. 2 shows an embodiment in which each unit U includes one venting device 240 and one cartridge 300, one venting device 240 and a plurality of cartridges 300 may also be provided.

Each of the plurality of units U may be provided on the side frame 220 of the pack case 200. In this case, the plurality of units U may be provided symmetrically with respect to the center of the side frame 220. According to the above-implemented configuration of the present disclosure, it is easy to suppress or extinguish flame by carbon dioxide released from the cartridge 300 included in the unit U corresponding to the location of the gas or spark discharged to the outside of the pack case 200.

Meanwhile, as shown in FIGS. 2 and 4, the pack case 200 may further include a cross-beam 250. The cross-beam 250 may be provided to connect at least portions of the side frame 220 to each other. For example, as shown in FIG. 2, the cross-beam 250 may be provided to extend in the Y-axis direction. In this case, the cross-beam 250 may partition the plurality of battery modules 100. A plurality of battery modules 100 may be arranged side by side on both sides of the cross-beam 250 inside the pack case 200. In this case, the plurality of units U may be symmetrically provided on both sides of the cross-beam 250 with respect to the side frame 220.

Meanwhile, in the case where the battery pack 10 of the present disclosure further includes the temperature sensor 400, as shown in FIG. 9, the temperature sensor 400 may be provided between the venting device 240 and the cartridge 300. According to the implemented configuration of the present disclosure, even if high-temperature gas or sparks are emitted from any venting device 240 and lead to a flame, the temperature sensor 400 provided side by side with the venting device 240 may detect the temperature of the flame, and the cartridge 300 provided along with the venting device 240 may operate to quickly extinguish the flame.

In addition, the pack case 200 may further include a partition 260. The partition 260 may be provided to separate the plurality of battery modules 100. The partition 260 may be configured to extend from the cross-beam 250. For example, as shown in FIG. 2, the partition 260 may be configured to extend from the cross-beam 250 in the X-axis direction. A plurality of partitions 260 may be provided to be spaced apart at regular intervals. According to the above-implemented configuration of the present disclosure, since the plurality of battery modules 100 are separated by the partition 260, even if an abnormal situation occurs in any one battery module 100, it is possible to prevent heat propagation to other battery modules 100.

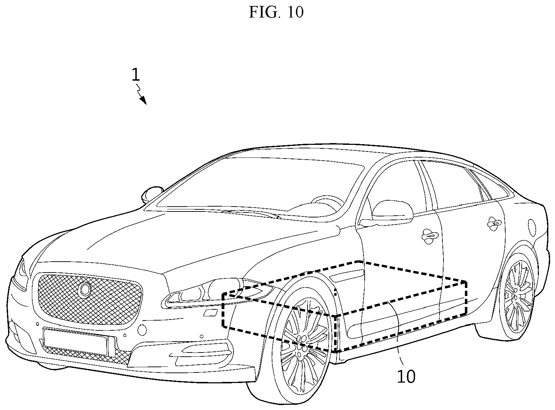

FIG. 10 is a perspective view of a vehicle including a battery pack according to an embodiment of the present disclosure.

Referring to FIG. 10, a vehicle 1 according to an embodiment of the present disclosure may include one or more battery packs 10 according to an embodiment of the present disclosure. The vehicle 1 according to the present disclosure may be, for example, an electric vehicle, a hybrid vehicle, or a plug-in hybrid vehicle. The vehicle 1 includes a four-wheeled vehicle and a two-wheeled vehicle. The vehicle 1 operates by receiving power from the battery pack 10 according to an embodiment of the present disclosure.

Since the battery pack 10 has the various effects mentioned above, the vehicle 1 including the same may also have those effects. Specifically, the battery pack 10 may suppress the occurrence of flame outside the pack case 200 by removing elements that may cause flame in the event of an abnormality in the battery cell 110 or battery module 100. In addition, it is possible to prevent subsequent chain ignition by early extinguishing flame occurring outside of the pack case 200 in the event of an abnormality in the battery cell 110 or battery module 100, and effectively secure thermal propagation prevention performance in a pack by maximally preventing thermal damage to other battery modules 100. Accordingly, the vehicle 1 including the battery pack 10 also has advantages in safety and reliability.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a plurality of battery modules comprising a plurality of battery cells;
a pack case configured to accommodate the plurality of battery modules; and
a cartridge provided in the pack case and configured to release carbon dioxide stored therein to the outside of the pack case.

2. The battery pack according to claim 1,
wherein the pack case comprises
a base frame configured to constitute the lower surface of the pack case and on which the plurality of battery modules is seated, and
a side frame extending upward from the base frame to constitute an outer surface of the pack case, and
wherein at least a portion of the cartridge is coupled to the side frame.

3. The battery pack according to claim 2,
wherein each of the plurality of battery modules comprises a thermistor configured to measure the temperature of gas generated in the battery module, and
wherein if the temperature of gas measured by the thermistor is equal to or greater than a first value and if a temperature rise rate is equal to or greater than a second value, carbon dioxide stored inside the cartridge is released to the outside of the pack case.

4. The battery pack according to claim 3,
wherein carbon dioxide is released from the cartridge if the first value is 200°C and the second value is 1°C/sec.

5. The battery pack according to claim 3,
wherein the cartridge comprises
a cylinder unit comprising a storage portion having a space for storing carbon dioxide therein and a release portion extending from the storage portion and configured to release carbon dioxide.

6. The battery pack according to claim 5,
wherein the diameter of the release portion is smaller than the diameter of the storage portion.

7. The battery pack according to claim 5,
wherein the cartridge further comprises
an operating unit connected to the cylinder unit and configured to enable the cylinder unit to release carbon dioxide if the temperature measured by the thermistor is equal to or greater than the first value and if the temperature rise rate is equal to or greater than the second value.

8. The battery pack according to claim 7,
wherein the operating unit is provided in a space between the side frame and the plurality of battery modules.

9. The battery pack according to claim 8,
wherein the pack case has a space in which the operating unit is provided.

10. The battery pack according to claim 3,
further comprising a temperature sensor configured to measure the temperature of flame occurring outside the pack case, and
wherein if the temperature of flame measured by the temperature sensor is a third value, carbon dioxide stored inside the cartridge is released to the outside of the pack case.

11. The battery pack according to claim 10,
wherein the temperature sensor is provided on the side frame and configured to measure the temperature of flame.

12. The battery pack according to claim 11,
wherein the carbon dioxide is released from the cartridge if the third value is 800°C to 1000°C.

13. The battery pack according to claim 10,
wherein the pack case comprises
a venting device provided on the side frame and configured to discharge gas generated in the battery module to the outside of the pack case, and
wherein the cartridge is configured to release carbon dioxide stored therein to purge oxygen around the venting device.

14. The battery pack according to claim 13,
wherein the cartridge is disposed side by side with the venting device in the horizontal direction.

15. The battery pack according to claim 14,
wherein a plurality of cartridges and a plurality of venting devices are provided,
wherein a plurality of units comprised of one or more cartridges and one venting device is provided, and
wherein the plurality of units is provided symmetrically with respect to the center of the side frame.

16. The battery pack according to claim 15,
wherein the pack case further comprises
a cross-beam configured to connect at least portions of the side frame to each other and separate the plurality of battery modules, and
wherein the plurality of units is symmetrically provided on both sides of the cross-beam.

17. The battery pack according to claim 16,
wherein the pack case
further comprise a partition extending from the cross-beam and configured to separate the plurality of battery modules.

18. A vehicle comprising the battery pack according to any one of claims 1 to 17.
